# EUROPÄISCHE PATENTSCHRIFT

(11) **EP 2 233 242 B1**
(45) Veröffentlichungstag und Bekanntmachung des Hinweises auf die Patenterteilung: **21.09.2011**
(21) Anmeldenummer: 10001637.7
(22) Anmeldetag: 18.02.2010
(51) Int. Cl.: B23Q 1/01, B23Q 11/00, B01D 50/00

(54) **Untergestell für eine Auftischholzbearbeitungsmaschine**
Subframe for a on-table wood processing machine
Châssis pour machine sur plateau de traitement du bois

(30) Priorität: 27.03.2009 DE 102009014716
(43) Veröffentlichungstag der Anmeldung: 29.09.2010
(73) Patentinhaber: Scheppach Fabrikation von Holzbearbeitungsmaschinen GmbH, 89335 Ichenhausen (DE)
(72) Erfinder: Windrich, Wolfgang, 89358 Ettenbeuren (DE)
(74) Vertreter: Munk, Ludwig

(56) Entgegenhaltungen:
- EP-A2- 0 879 671
- DE-U1- 8 814 041
- US-A- 3 514 906
- US-A- 4 221 081

## Beschreibung

Die Erfindung betrifft ein Untergestell für eine sockellose Auftischholzbearbeitungsmaschine gemäß dem Oberbegriff des Anspruchs 1.

Bei Holzbearbeitungsmaschinen, wie z. B. Sägen oder Hobelmaschinen fallen große Mengen an Spänen an, welche abgesaugt werden müssen. Dazu sind derartige Maschinen an Absauganlagen angeschlossen. Eine Hobelmaschine mit angeschlossener Absauganlage ist beispielsweise dem Prospekt "IXES professional 2001", Seite 32 - 33, der Fa. Scheppach, Maschinenfabrik GmbH & Co. KG zu entnehmen. Dabei wird die Absauganlage neben der Maschine aufgestellt und verfügt über entsprechende Anschlüsse für einen mit der Maschine zu verbindenden Absaugschlauch, wobei der oder die Anschlüsse mit bestimmten Anschlussreduzierungen für gängige Absaugschlauchdurchmesser eingestellt werden können. Ein elektromotorbetriebener Ventilator saugt dabei die an der Maschine anfallenden Späne in einen Spänesack der Absauganlage.

Dabei gibt es in der Holzbearbeitung neben großformatigen Profimaschinen mit eigenem Maschinensockel auch viele Kleingeräte, welche keinen eigenen Sockel aufweisen und - bei mittlerer Größe - auf Untergestelle oder - im Fall von Kleingeräten - auf eine Werkbank oder dergleichen aufgestellt werden, um mit ihren Werkzeugen auf einer Arbeitshöhe eines Bedieners angeordnet zu werden. Eine solche Auftisch-Hobelmaschine ist beispielsweise dem Prospekt "Scheppach Werkstatt", Ausgabe Februar 2001 der Fa. Scheppach Maschinenfabrik GmbH & Co. KG zu entnehmen. Für derartige, im Heimwerkerbereich eingesetzte Auftischgeräte sind die im Profibereich gängigen Absauganlagen oft überdimensioniert.

Es ist auch schon ein Untergestell für Schleifmaschinen in Gebrauch, das als Absauganlage ausgebildet ist. Dieses Untergestell weist hierzu zwei Ablufteintritte für die von den Schleifscheiben kommende Abluft und eine Ventilatoranordnung zum Absaugen der Abluft auf. Die Abluft kann durch am Boden vorgesehene Öffnungen aus dem Untergestell austreten. Im Untergestell ist dabei ein Absinken der Schleifspäne vorgesehen, die dann durch die unterseitigen Öffnungen mit der Abluft aus dem Untergestell herausgeblasen werden. Eine Abscheideeinrichtung zur Abscheidung der Schleifspäne aus der Abluft ist jedoch nicht vorgesehen. Diese bekannte Anordnung erweist sich daher nicht sicher und arbeitsfreundlich genug. Abgesehen davon ist diese bekannte Anordnung nur für Werkzeugmaschinen mit geringem Späneaufkommen geeignet und würde bei hohem Späneaufkommen zu Störungen führen. Die bekannte Anordnung ist daher auch nur beschränkt brauchbar.

Hiervon ausgehend ist es Aufgabe der vorliegenden Erfindung, eine platzsparende Absauganlage für kleinformatige Auftischholzbearbeitungsmaschine zu schaffen, die eine hohe Sicherheit und Arbeitsfreundlichkeit aufweist.

Diese Aufgabe wird mit den Merkmalen des Anspruchs 1 gelöst.

Erfindungsgemäß wird ein Untergestell vorgeschlagen, welches zum Aufstellen zumindest einer sockellosen, spanenden Auftischholzbearbeitungsmaschinen in Arbeitshöhe eines Bedieners geeignet ist, wie z.B. einer Kreissäge, wobei das Untergestell als Absauganlage für die Werkzeugmaschine ausgebildet ist, mit zumindest einem Ablufteintritt für von der Werkzeugmaschine kommende Abluft, einer Ventilatoranordnung zum Befördern des Abluftstroms, einer Abscheideanordnung zur Abscheidung von Festkörpern aus dem Abluftstrom, und einem Festkörperaufnahmevolumen zur Aufnahme der aus der Abluft abgeschiedenen Festkörper, sowie einem Reinluftaustritt, zu dem der gereinigte Abluftstrom von der Ventilatoranordnung befördert wird, wobei das Untergestell eine von seinen Wänden mehrseitig umschlossene Kammer aufweist, welche über eine Türe verschließbar und zum Ausräumen zugänglich ist, wobei der Ablufteintritt in die Kammer mündet und der Reinluftaustritt aus der Kammer herausführt, so dass die Kammer als Festkörperaufnahmevolumen dienen kann.

Mit dem erfindungsgemäßen Untergestell-Absauganlagen-Modul wird auf platzsparende Weise eine universell einsetzbare Absauganlage mit einer Abscheideanordnung geschaffen, welche unter der Maschine verstaut ist und gleichzeitig die Funktion des Maschinenuntergestells übernimmt, nämlich die Arbeitsebene der Werkzeugmaschine auf Arbeitshöhe eines Bedieners zu bringen.

Damit gelingt nicht nur eine platzsparende Anordnung der Absauganlage in der Werkstatt, sondern es lassen sich auch Kleingeräte mit Absaugung betreiben, für die gängige Absauganlagen überdimensioniert wären, wodurch auch bei solchen Maschinen eine hohe Sicherheit und Arbeitsfreundlichkeit gewährleistet wird. Denn gerade der Hobbyhandwerker hat oft nicht genügend Platz zur Verfügung, sondern hat seine Maschinen in Keller- oder Garagenräumen auf engstem Raum aufgestellt.

Das Untergestell weist dazu eine schrankartig ausgebildete, von seinen Wänden mehrseitig umschlossene Kammer auf, welche über eine Türe verschließbar ist. Die Kammer kann so als Festkörperaufnahmevolumen dienen, wenn der Ablufteintritt in die Kammer mündet und eine aus der Kammer herausführende Reinluftaustrittsöffnung vorgesehen ist. Über die Türe kann die Kammer ausgeräumt werden.

Dabei kann die Kammer direkt als Aufnahmevolumen für die aus der Abluft abgeschiedenen Festkörper, nämlich Späne und/oder Stäube dienen, wobei ein großes Spänevolumen aufgenommen werden kann. Dazu kann beispielsweise vor der Reinluftaustrittsöffnung ein entsprechender Filter als Abscheideanordnung vorgesehen sein. Es versteht sich von selbst, dass die Türe der Kammer mit Dichtungen versehen ist und die Kammerwände ebenfalls luftdicht aneinander anschließen, beispielsweise verschweißt sind. Alternativ oder ergänzend zu dem vor der Reinluftaustrittsöffnung vorgesehenen Filter kann dabei die Reinluftaustrittsöffnung höhenmäßig oberhalb und beabstandet von einem Bodenniveau der Kammer angeordnet sein, so dass in der Abluft enthaltene Festkörperrückstände aufgrund ihres Gewichts nicht mehr durch die Reinluftaustrittsöffnung aus der Kammer herausgetragen werden, sondern in der Kammer gefangen werden.

In dieser Ausführungsform ist in einer geschlossenen Kammer ein Filterbehälter untergebracht, welcher zumindest abschnittsweise aus einem luftdurchlässigen, aber festkörperzurückhaltendem Material besteht und mit einer Eingangsöffnung mit dem Ablufteintritt der Kammer verbunden ist. Einerseits ist dabei der Spänesack gegen Beschädigungen von außen geschützt und andererseits kann der Reinluftstrom über die Reinluftaustrittsöffnung der Kammer besser in eine gewünschte Richtung gelenkt werden.

Ferner kann gemäß einer weiteren vorteilhaften Weiterbildung dieser Variante eine zweistufige Filterung realisiert werden. Dem Filterbehälter kann dabei ein weiterer Filter am Reinluftaustritt nachgeschaltet werden. So könnte der Filterbehälter beispielsweise als Spänesack aus einem relativ grobmaschigen bzw. grobporigen Textil ausgebildet sein, welcher gröbere Luftverunreinigungen, wie beispielsweise Späne zurückhält, aber eine mit Feinstäuben beladene Abluft durchlässt, welche dann in einer vor dem Reinluftaustritt an einer Kammerwand angebrachten Filterpatrone von den Feinstäuben gereinigt wird.

Der Spänesack kann über die mit der Türe verschlossene Entnahmeöffnung der Kammer einfach für eine Entleerung erreicht werden, wohingegen die Filterpatrone, welche lediglich noch von dem durch den Spänesack vorgefilterten Abluftstrom erreicht wird, nur seltener ausgetauscht werden muss.

Als geeignetes Material für den Spänesack hat sich dabei ein Polyester-Nadelfilz herausgestellt, welches dem Spänesack neben den gewünschten Filtereigenschaften auch eine gewisse Formsteifigkeit verleiht, so dass keine zusätzlichen Befestigungsmaßnahmen mehr getroffen werden müssen, um einen leeren Spänesack aufzuspannen oder dergleichen.

Die Ventilatoreinheit kann dabei einen Ventilator aufweisen, welcher vorzugsweise am Reinluftaustritt angeordnet ist und den Abluftstrom somit ausgehend von der Maschine durch das Untergestell-Absaugmodul saugt, ohne einer Korrosion aufgrund der in dem Luftstrom mitgeführten Fremdkörper ausgesetzt zu sein. Wenn der Abluftstrom durch eine vor dem Reinluftaustritt angeordnete Filterpatrone gelenkt wird, ist der Ventilator der Filterpatrone vorteilhaft strömungsmäßig nachgeordnet, um so einerseits die Ventilatoreinheit vor Korrosion durch im Luftstrom befindliche Stäube oder dergleichen zu schützen und andererseits eine einfache Zugänglichkeit von außen zu gewährleisten. Die Ventilatoreinheit kann dabei ein außen an einer Kammerseitenwand angeordnetes Antriebsaggregat aufweisen, mit dem der Ventilator antreibbar ist. Ein solches Antriebsaggregat kann beispielsweise einen Elektromotor mit entsprechenden Stromversorgungsleitungen zum Anstecken an das Stromnetz aufweisen.

Vorteilhaft weist das Antriebsaggregat dabei einen zu einem Steckplatz für die auf das Untergestell aufzustellende Maschine führenden Leitungszweig auf. Dadurch, dass an dem Antriebsaggregat ein zusätzlicher Steckplatz für die aufzustellende Maschine vorgesehen ist, gelingt nicht nur eine Reduzierung der zu verlegenden Kabel, sondern es kann auch eine Schaltung der Maschine und der Absauganlage über eine gemeinsame Steuereinheit realisiert werden, welche vorteilhaft ebenfalls in dem Antriebsaggregat integriert ist. So kann beispielsweise eine zeitverzögerte Abschaltung der Absauganlage bei Abschaltung der Maschine realisiert werden, um sicherzustellen, dass sämtliche beim Arbeitsvorgang an der Maschine anfallenden Späne eingesaugt werden. Dazu kann an dem Antriebsaggregat ein gemeinsamer Schalter vorgesehen sein, welcher den Steckplatz für die Versorgungsleitung der Maschine und - zeitverzögert dazu - den Elektromotor der Ventilatoreinheit schaltet. Es könnte jedoch auch ein Fühler vorgesehen sein, welcher erfasst, ob die Maschine läuft oder nicht und im Ansprechen auf die Betätigung eines Ein- Aus-Schalters an der Maschine die Absauganlage ein- oder ausschaltet.

Vorteilhaft ist das Untergestell auf die Größe bestimmter Maschinen, für die es gedacht ist, konfektioniert, so dass es zur Größe einer Maschine aus einer Auswahl von ähnlich dimensionierten Maschinen passt bzw. auf verschiedene Maschinen einer Serie, welche alle in etwa dieselbe Abmessung aufweisen. Dazu weist das Untergestell eine Tischplatte auf, welche passend für gängige, zum Abstellen auf einer Fläche geeigneter Auftischholzbearbeitungsmaschinen ist. Einem Heimwerker kann somit ein universell einsetzbares Untergestell-Absaugmodul für seinen gesamten Auftischholzbearbeitungsmaschinenpark bereitgestellt werden. Die Erfindung ist jedoch nicht darauf beschränkt. So wäre es beispielsweise ebenfalls denkbar, das Untergestell-Absaugmodul zu Zwecken der Teilegleichheit für eine Maschinenserie vorzufertigen, welche jeweils mit einem angebauten Untergestell verkauft werden. Ebenfalls denkbar wäre es, das Untergestell zum Aufstellen von zwei oder mehr AuftischHolzbearbeitungsmaschinen zu dimensionieren und entsprechend mit mehreren Absaugschlauchanschlüssen zu versehen.

Besonders einfach ist die Verbindung eines von der AuftischHolzbearbeitungsmaschine kommenden Absaugschlauches mit der in dem Untergestell integrierten Absauganlage, wenn an der Ablufteintrittsöffnung ein Schlauchanschlussstutzen für den Absaugschlauch angebracht ist, so dass dieser lediglich auf den Schlauchanschlussstutzen aufgeschoben und beispielsweise mit einer Schlauchklemme festgezogen werden muss.

Weitere vorteilhafte Weiterbildungen der Erfindung werden anhand der in den anliegenden Zeichnungen dargestellten Ausführungsformen der Erfindung näher erläutert. Es zeigen:
- Figur 1: eine Seitenansicht eines Untergestells mit einer aufgestellten Hobelmaschine gemäß einer ersten Ausführungsform der Erfindung bei entfernter Türe;
- Figur 2: eine Seitenansicht eines Untergestells gemäß einer weiteren Ausführungsform der Erfindung bei abgenommener Türe;
- Figur 3: eine perspektivische Ansicht des in Figur 2 dargestellten Untergestells;
- Figur 4: eine Schnittansicht entlang der Linie IV-IV in Figur 2; und
- Figur 5: eine der Figur 2 entsprechende Ansicht eines Untergestells gemäß einer weiteren Ausführungsform der Erfindung.

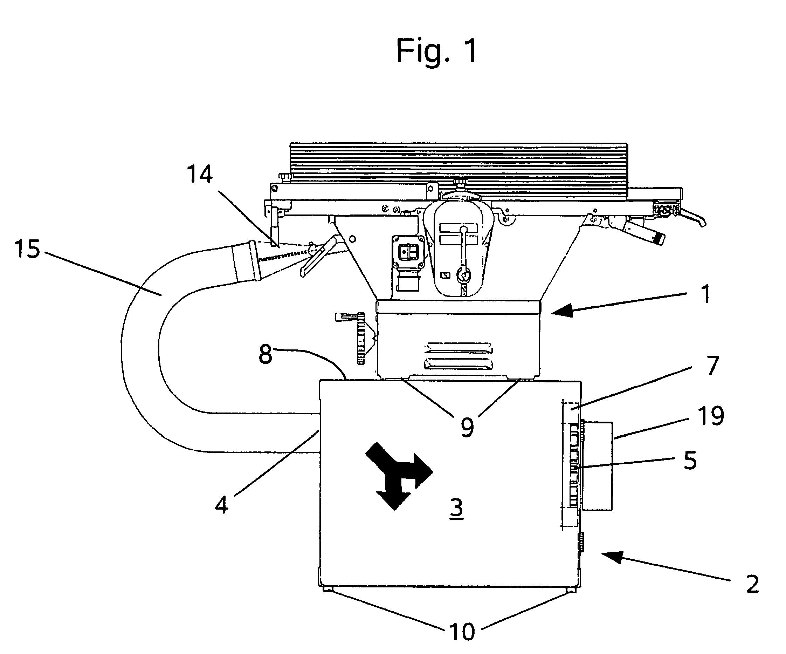

Zunächst wird Bezug genommen auf die Figur 1. Mit 1 ist dabei eine Hobelmaschine bezeichnet, welche auf einem mit 2 bezeichneten Untergestell abgestellt ist und so mit ihrer Arbeitsfläche auf Arbeitshöhe eines Bedieners aufgestellt ist. Das Untergestell 2 steht dabei auf Gummifüßen 10 und hat eine Tischplatte 8, auf der wiederum die Hobelmaschine 1 mit ihren Füßen 9 abgestellt ist. Das Untergestell 2 ist dabei höhen- und stellflächenmäßig auf die Maße der Hobelmaschine 1 bzw. vergleichbarer Maschinen aus einer Serie von Maschinen mit in etwa gleichen Abmaßen abgestimmt, so dass es universell für alle Maschinen dieser Serie, beispielsweise Kreissägen, Hobelmaschinen etc. verwendet werden kann.

In das Untergestell 2 ist dabei eine Absauganlage integriert. Dazu weist das Untergestell 2 eine aus einem Ventilator 5 und einem Antriebsaggregat 19 für den Ventilator gebildete Ventilatoreinheit 5, 19 auf, welche an einer als Reinluftaustritt dienenden Öffnung in einer Seitenwand des Untergestells angeordnet ist. Das Untergestell 2 umschließt dabei mehrseitig eine Kammer 3, welche als Festkörperaufnahmevolumen zum Aufnehmen der in der abgesaugten Luft enthaltenen und daraus abgeschiedenen Festkörper dient. Die Kammer 3 ist dabei zum Ausräumen über eine Entnahmeöffnung zugänglich (aus der Blattebene in der Figur ins Kammerinnere hinein). Die Entnahmeöffnung ist dabei über eine, beispielsweise mit umlaufenden Gummidichtungen versehene Türe verschließbar, welche in der Figur 1 nicht dargestellt ist.

Eingangsseitig weist das Untergestell 2 bzw. die Kammer 3 eine Ablufteintrittsöffnung 4 auf, an der ein Absaugschlauch 15 angeschlossen ist, welcher zu einer Absaugdüse 14 führt, welche an der Maschine 1 befestigt ist und mit der die dort anfallenden Späne und/oder Stäube eingesaugt werden.

Austrittsseitig befindet sich vor dem Ventilator 5 und dem durch das Antriebsaggregat 19 geführten Reinluftaustrittskanal ein Filter 7, welcher den Reinluftaustritt abdeckt und die in der Abluft enthaltenen Festkörper, hier also Hobelspäne, zurückhält. Der Filter 7 ist in der dargestellten Ausführungsform als flächige Abdeckung des Ventilators und des Reinluftaustritts ausgebildet und kann beispielsweise aus einem leicht zu reinigenden Material wie einem Schaumstoff oder einem Filtertextil ausgebildet sein, welches in einer entsprechenden Halterung oder Konsole austauschbar angeordnet ist.

Das Antriebsaggregat 19 ist dabei über ein nicht dargestelltes Stromversorgungskabel über das Stromnetz mit elektrischer Energie versorgbar und weist einen ebenfalls nicht dargestellten Steckplatz für die Stromversorgungsteitung der Maschine 1 auf, welcher mit der Stromversorgung des Antriebsaggregats 19 verbunden ist. Nach Art einer schaltbaren Steckerleiste kann über einen Schalter gleichzeitig das Antriebsaggregat ein- und der Steckplatz für die Maschine 1 zugeschaltet werden.

Betätigt ein Bediener der Hobelmaschine 1 diesen Schalter, so wird über einen Elektromotor des Antriebsaggregats 19 der Ventilator 5 betätigt und gleichzeitig die Hobelmaschine 1 zugeschaltet. Bei verschlossener Türe vor der Kammer 3 wird somit über die Saugdüse 14 und den Absaugschlauch 15 Abluft und darin enthaltene Hobelspäne und andere Verunreinigungen über den Ablufteintritt 4 in das Innere der Kammer 3 gesaugt. Schwere Festkörper fallen dort aufgrund ihres Gewichts nach unten und werden auf diese Weise aus dem Abluftstrom ausgesichtet, welcher zur Reinluftaustrittsseite hin gesaugt wird, wie durch den Verzweigungspfeil in der Figur dargestellt ist. Dort werden über die Filterabdeckung 7 im Abluftstrom noch enthaltene, leichtere Verunreinigungen ausgefiltert, bevor die so erhaltene Reinluft aus dem durch das Antriebsaggregat 19 geführten Reinluftaustrittskanal aus dem Untergestell-Absaugmodul 2 austritt. Nach Abschalten der Kombination Werkzeugmaschine-Absauganlage an dem Schalter läuft der Ventilator beispielsweise zeitschaltuhrgesteuert noch eine Weile weiter, nachdem die Maschine schon abgeschaltet ist, um so möglichst alle Späne abzusaugen.

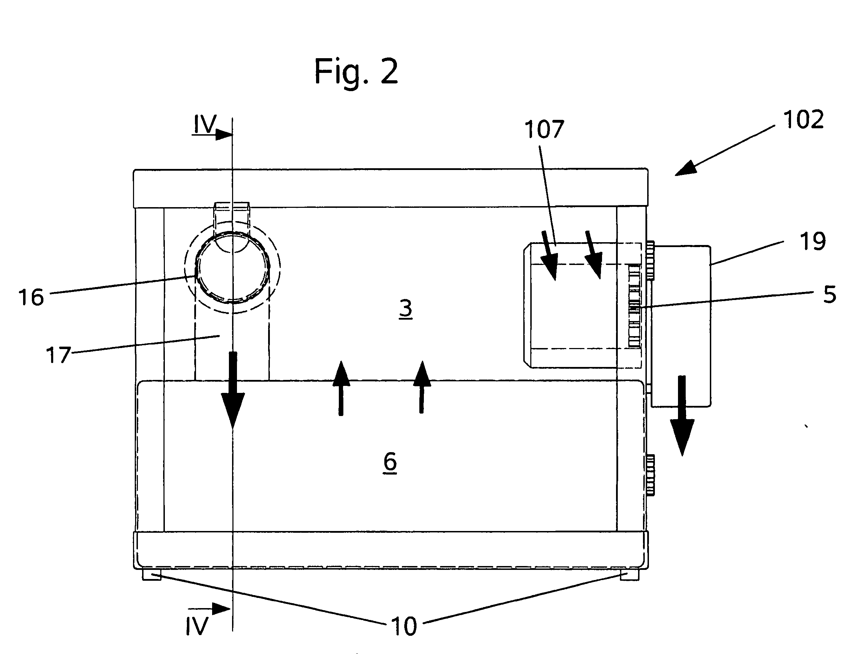

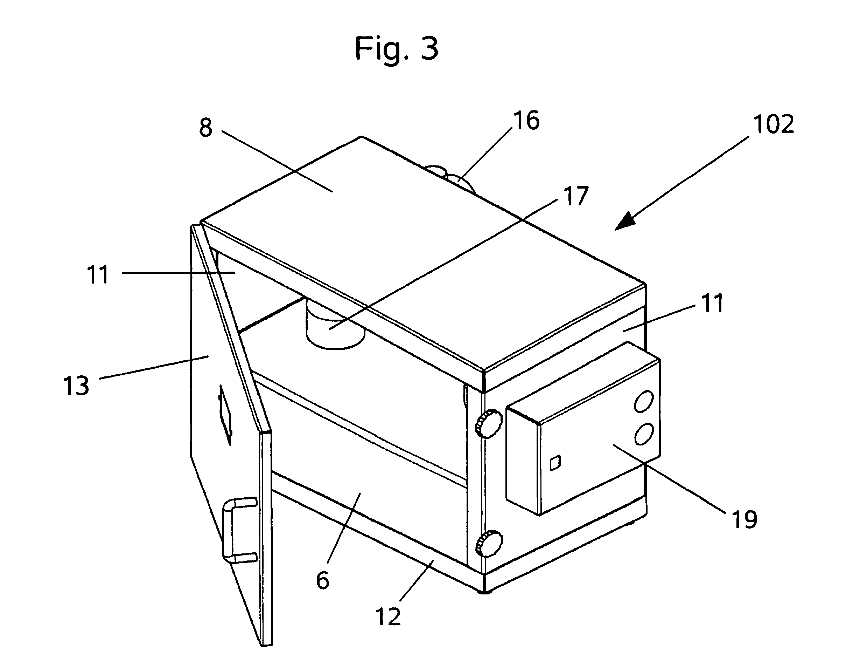

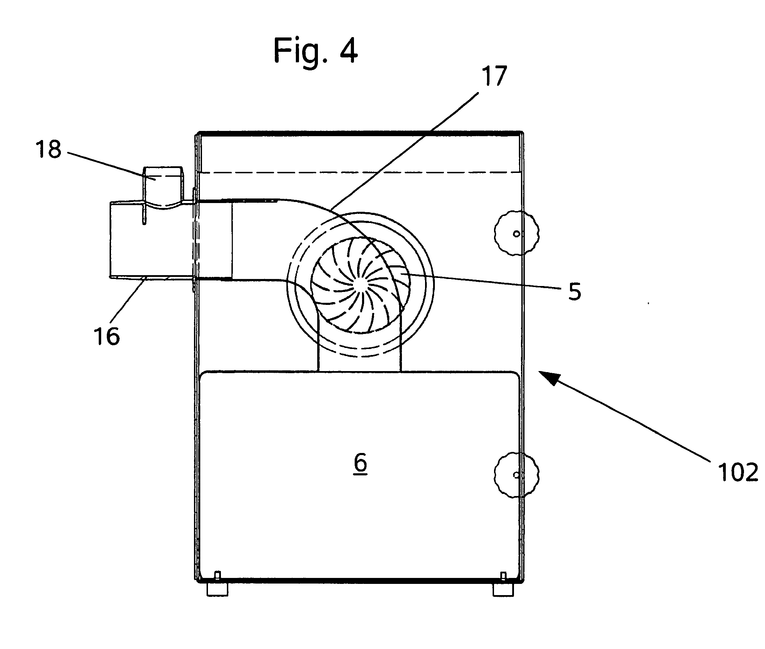

Eine weitere Ausführungsform der Erfindung ist den Figuren 2-4 zu entnehmen. Dabei wurden baugleiche Teile mit den selben Bezugsziffern versehen wie bei der in Figur 1 dargestellten Ausführungsform der Erfindung. Auch das in den Figuren 2-4 dargestellte Untergestell 102 weist denselben schrankartigen Aufbau wie das Untergestell 2 der Figur 1 auf, wobei eine Kammer 3 von als Blechprofilen ausgebildeten Seitenwänden 11, einer ebenfalls auch als Blechprofil ausgebildeten, darauf aufgeschweißten Tischplatte 8 und einem an die Seitenwände 11 angeschweißten Bodenblechprofil 12 mehrseitig umschlossen und über eine mit einer Türe 13 verschließbare Entnahmeöffnung zugänglich ist. Die Türe 13 bzw. die ihr zugewandten Abkantungen der Wandprofile 8, 11, 12 können dabei mit nicht dargestellten Dichtungen versehen sein.

In der Kammer 3 ist dabei ein formsteifer Spänesack bzw. Filterbehälter 6 untergebracht, welcher abmessungsmäßig genau auf die Grundfläche der Kammer 3 abgestimmt ist und höhenmäßig bis knapp unterhalb einer vor dem Ventilator 5 bzw. dem Reinluftaustritt angeordneten Filterpatrone 7 reicht. Der Spänesack 6 ist über einen Anbindungsschlauch 17 an einen als Ablufteintritt fungierenden Schlauchanschlussstutzen 16 angeschlossen. Der Schlauchanschlussstutzen 16 ragt dabei sowohl ins Kammerinnere, um den Anbindungsschlauch 17 aufzunehmen, welcher mit geeigneten Spannvorrichtungen, wie z.B. einer Schlauchschelle an den Anschlussstutzen 16 befestigt werden kann, sowie nach außen, um dort auf gleiche Weise einen von der Werkzeugmaschine kommenden Absaugschlauch aufzunehmen. Auf der Außenseite weist der Schlauchanschlussstutzen 16 ferner einen Anschlussabzweig 18 auf, an dem ein für Kreissägen benötigter zusätzlicher Absaugschlauch angeschlossen werden kann. Der Anschlussabzweig 18 und der Hauptanschluss können jeweils verschlossen werden, um so Anschlussmöglichkeiten für Absaugschläuche unterschiedlichen Durchmessers zu bieten.

Die Filterpatrone 107 umschließt dabei mit einem zylinderförmigen Filterabschnitt den Ventilator 5 und weist eine kreisplattenförmige Abdeckung auf, so dass der zum Reinluftaustritt hin gesaugte Luftstrom durch den zylinderförmigen Filterabschnitt hindurchgeführt wird. Das Antriebsaggregat 19 für den Ventilator 5 entspricht dabei baugleich dem in der vorhergehenden Ausführungsform beschriebenen und der Reinluftaustrittskanal ist durch das Antriebsaggregat 19 hindurchgeführt. Wird der Ventilator 5 über den in dem Antriebsaggregat 19 angeordneten Elektromotor betätigt, so wird zunächst Abluft über den Ablufteintritt 16 und den Anbindungsschlauch 17 in den Spänesack 6 gesaugt, welcher aus einem im Vergleich zum Filtermaterial der Staubfilterpatrone 107 grobporigen Filtertextil, wie beispielsweise einem Polyester-Nadelfilz besteht, bzw. eine Außenhülle aus dem Filtertextil aufweist, wobei der Anbindungsschlauch 17 auch aus einem anderen Material sein kann, beispielsweise einem Kunststoff, welcher am Einmündungsbereich in die Außenhülle mit der Außenhülle verklebt sein kann. Im Spänesack 6 werden somit gröbere Festkörper, also z. B. Hobelspäne oder dergleichen zurückgehalten, wohingegen Stäube mit dem Abluftstrom die Außenhülle des Spänesack 6 durchdringen und erst an der Staubfilterpatrone 107 aus dem Abluftstrom abgeschieden werden und in dem zylinderringförmigen Filtermaterial der Filterpatrone 107 verbleiben.

Durch die zweistufige Filterung kann einem Verstopfen der Staubfilterpatrone 107 vorgebeugt werden, so dass diese nur sehr selten ausgetauscht bzw. gereinigt werden muss, wohingegen der Spänesack 6 über die Entnahmeöffnung der Kammer 3 häufiger entnommen und entleert werden kann. Gegenüber einer Ausführungsform ohne Spänesack fällt hier das Ausräumen leichter, da der Spänesack insgesamt entnommen und entleert werden kann.

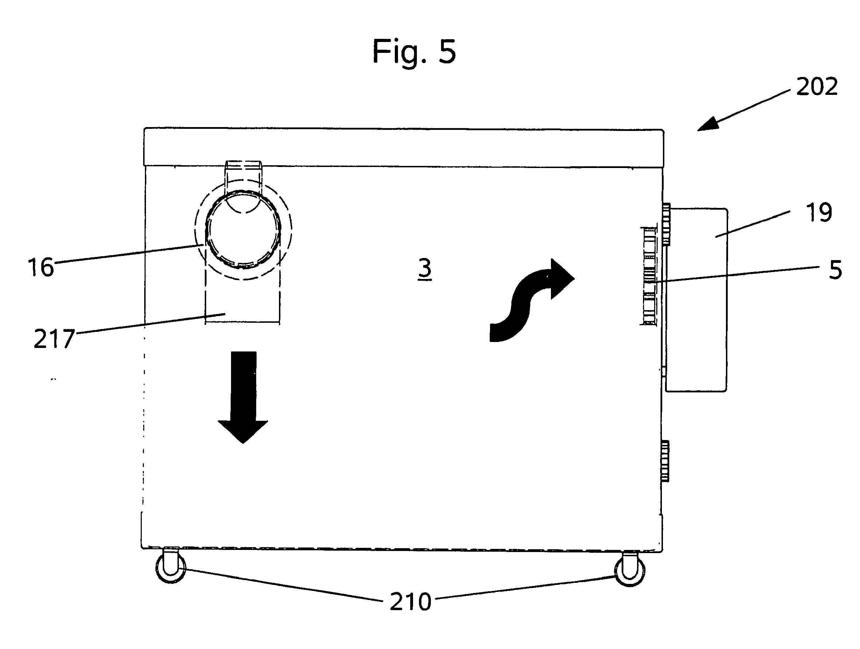

Schließlich zeigt die Figur 5 eine weitere Ausführungsform der Erfindung, in der überhaupt kein Filter verbaut ist, sondern allein aufgrund des höhenmäßigen Abstands des Reinluftaustritts von dem Bodenniveau der Kammer 3 ein Abscheiden zumindest schwererer und größerer Festkörper aus dem Abluftstrom erfolgt. Dieser tritt wiederum über einen an dem Schlauchanschlussstutzen 16 angebrachten Absaugschlauch der Werkzeugmaschine und einen nach unten gekrümmten Eingangskrümmer 217 in das Innere der Kammer 3 des Untergestells 202 ein und wird dort zum Ventilator 5 hingesaugt, wobei sich Späne aufgrund der Schwerkraft am Boden der Kammer 3 ablagern, welche wiederum über eine nicht dargestellte Türe zugänglich ist. Anstatt Gummifüßen weist das Untergestell 202 ferner Rollen auf, so dass es in der Werkstatt frei beweglich ist.

Im Rahmen der von den Ansprüchen definierten Erfindung sind Abweichungen und Modifikationen von den dargestellten Ausführungsformen möglich.

So könnte beispielsweise auch ein dem durch das Antriebsaggregat 19 hindurchgeführten Luftaustrittskanal nachgeschalteter Filter vorgesehen sein, welcher zu Reinigungs- oder Austauschzwecken von außen her zugänglich ist.

Schließlich wäre es bei der Ausführungsform mit dem Spänesack auch denkbar, lediglich eine einstufige Filterung der Abluft vorzunehmen und die Staubfilterpatrone 7 wegzulassen, so fern eine höhere Staubbelastung akzeptabel oder ein engporigeres Filtertextil für den Spänesack gewählt ist.

### Bezugszeichenliste

- 1: Maschine
- 2: Untergestell
- 3: Kammer
- 4: Ablufteintritt
- 5: Ventilator
- 6: Spänesack
- 7: Filterabdeckung
- 8: Tischplatten-Blechprofil
- 9: Maschinenfüße
- 10: Untergestellfüße
- 11: Seitenwand-Blechprofil
- 12: Bodenblechprofil
- 13: Untergestelltüre
- 14: Absaugdüse
- 15: Absaugschlauch
- 16: Schlauchanschlussstutzen
- 17: Anbindungsschlauch
- 18: Anschlusssabzweig
- 19: Antriebsaggregat
- 102: Untergestell
- 107: Staubfilterpatrone
- 202: Untergestell
- 210: Rollen
- 217: Eingangskrümmer

## Patentansprüche

1. Auftischholzbearbeitungsmaschinen-Untergestell (2; 102; 202) zum Aufstellen einer sockellosen, spanenden Auftisch-Holzbearbeitungsmaschine (1) in Arbeitshöhe eines Bedieners, mit einer Tischplatte (8), welche passend für gängige, zum Abstellen auf einer Fläche geeignete AuftischHolzbearbeitungsmaschinen, wie z.B. Kreissägen oder Abricht- und Dickenhobel zum Abstellen einer Auftisch-Holzbearbeitungsmaschine dimensioniert ist, wobei
das Untergestell (2) als Absauganlage für die Werkzeugmaschine (1) ausgebildet ist, mit zumindest einem Ablufteintritt (4; 16, 17; 16, 217) für von der Werkzeugmaschine (1) kommende Abluft und einer Ventilatoranordnung (5, 19) zum Befördern des Abluftstroms, einer Abscheideanordnung (3, 7; 6, 107; 3, 4, 19) zur Abscheidung von Festkörpern aus dem Abluftstrom, einem Festkörperaufnahmevolumen (3; 6, 7) zur Aufnahme der aus der Abluft abgeschiedenen Festkörper, und einem Reinluftaustritt (19), zu dem der gereinigte Abluftstrom von der Ventilatoranordnung (5, 19) befördert wird, **dadurch gekennzeichnet, dass**
das Untergestell (2) eine von seinen im wesentlichen luftdicht aneinander anschließenden Wänden (8, 11, 12) mehrseitig umschlossene Kammer (3) aufweist, welche über eine mit Dichtungen versehene Türe verschließbar und zum Ausräumen zugänglich ist, der Ablufteintritt (4; 16, 17; 16, 217) in die Kammer (3) mündet, der Reinluftaustritt (19) aus der Kammer (3) herausführt, und sich das Festkörperaufnahmevolumen (3; 6) in der Kammer (3) befindet, und dass
am Ablufteintritt (16, 17; 16, 217) an einer Seitenwand der Kammer (3) zumindest ein Schlauchanschlussstutzen (16) für einen die Abluft von der Auftischholzbearbeitungsmaschine (1) abführenden Absaugschlauch (15) vorgesehen ist.

2. Auftischholzbearbeitungsmaschinen-Untergestell (2; 102; 202) nach Anspruch 1, wobei der Reinluftaustritt (19) und vorzugsweise auch der Ablufteintritt (16, 217) oberhalb und höhenmäßig beabstandet von einem Kammerboden (12) in die Kammer (3) münden.

3. Auftischholzbearbeitungsmaschinen-Untergestell (102) nach einem der vorhergehenden Ansprüche, wobei sich das Festkörperaufnahmevolumen (6) in einem Filterbehälter (6) befindet, welcher eine Außenhülle aufweist, die zumindest abschnittsweise aus einem Filtermaterial besteht und mit einer Eintrittsöffnung an den Ablufteintritt (16, 17) angeschlossen ist, wobei der Filterbehälter (6) in der Kammer (3) untergebracht ist.

4. Auftischholzbearbeitungsmaschinen-Untergestell (102) nach Anspruch 3, wobei das Filtermaterial ein vorzugsweise formsteifes Textilmaterial ist, beispielsweise ein Polyester-Nadelfilz, und der Filterbehälter (6) vorzugsweise ein zumindest im wesentlichen aus dem Textilmaterial bestehender Spänesack (6) ist.

5. Auftischholzbearbeitungsmaschinen-Untergestell (2; 102) nach einem der vorhergehenden Ansprüche, wobei die Abscheideanordnung (3, 7; 6, 107) eine dem Reinluftaustritt (19) vorgeschaltete Filtereinheit (7; 107) aufweist, durch die der Abluftstrom aus der Kammer (3) geführt ist, insbesondere eine der Ventilatoreinheit (5, 19) strömungsmäßig vorgeschaltete Filterpatrone (107).

6. Auftischholzbearbeitungsmaschinen-Untergestell (102) nach Anspruch 5, wobei die Abscheideanordnung (6, 107) in der Kammer (3) den Filterbehälter (6) und eine dem Filterbehälter (6) strömungsmäßig nachgeordnete Filterpatrone (107) aufweist, wobei das Filtermaterial der Außenhülle des Filterbehälters (6) luftdurchlässig, aber spanrückhaltend ist und die Filterpatrone luftdurchlässig, aber staubrückhaltend, so dass der Filterbehälter (6) ein erstes Festkörperaufnahmevolumen (6) für grobe Festkörper wie Späne umschließt und die Filterpatrone (107) ein zweites Festkörperaufnahmevolumen (107) für feinere Festkörper wie Staub bildet.

7. Auftischholzbearbeitungsmaschinen-Untergestell (2; 102; 202) nach einem der vorhergehenden Ansprüche, wobei die Tischplatte (8) gleichzeitig eine Wand der Kammer (3) bildet.

8. Auftischholzbearbeitungsmaschinen-Untergestell (102) nach Anspruch 4, wobei der Schlauchanschlussstutzen (16) für einen die Abluft von der Maschine (1) abführenden Absaugschlauch (15) von der Seitenwand der Kammer (3) nach außen vorsteht und für einen in den Spänesack (6) mündenden Anbindungsschlauch (17) ins Kammerinnere hineinragt.

9. Auftischholzbearbeitungsmaschinen-Untergestell (2; 102; 202) nach einem der vorhergehenden Ansprüche, wobei die Ventilatoranordnung (5, 19) ein außenliegendes, an einer Seitenwand (11) der Kammer angeordnetes Antriebsaggregat (19) für einen vor einer Reinluftaustrittsöffnung in der Kammerseitenwand (11) angeordneten Ventilator (5) aufweist.

10. Auftischholzbearbeitungsmaschinen-Untergestell (2; 102; 202) nach Anspruch 9, wobei das Antriebsaggregat (19) zumindest einen Steckplatz zum Einstecken einer Stromversorgung der Werkzeugmaschine (1) und vorzugsweise einen EIN-AUS-Schalter aufweist und eine Steuereinheit, welche bei einer Abschaltung der Absauganlage und der an dem Antriebsaggregat eingesteckten Stromversorgung über den EIN-AUS-Schalter zunächst die Werkzeugmaschine ausschaltet und erst zeitverzögert die Absauganlage.

11. Auftischholzbearbeitungsmaschinen-Untergestell (102) nach einem der Ansprüche 9 oder 10, wobei die Filterpatrone (107) einen um den Ventilator (5) herum verlaufenden, zylindrischen Filterabschnitt aufweist, durch den der Abluftstrom hindurchgeführt ist.

12. Auftischholzbearbeitungsmaschinen-Untergestell (202) nach einem der vorhergehenden Ansprüche, wobei es auf Rollen (210) steht.

## Claims

1. An on-table woodworking machine subframe (2; 102; 202) for setting up a baseless, chip cutting on-table woodworking machine (1) in the working height of a user, comprising a table plate (8) for depositing an on-table woodworking machine thereon, which table plate is fittingly dimensioned for usual on-table woodworking machines suited for being deposited onto a surface such as, e.g., circular saws or surface and thickness planers, wherein
the subframe (2) is configured as extraction unit for the machine tool (1), comprising at least one exhaust air inlet (4; 16, 17; 16, 217) for exhaust air coming from the machine tool (1) and a valve arrangement (5, 19) for conveying the exhaust air flow, a separation arrangement (3, 7; 6, 107; 3, 4, 19) for separating solid bodies from the exhaust air flow, a solid body receiving volume (3; 6, 7) for receiving the solid bodies separated from the exhaust air, and a clean air outlet (19) to which the cleaned exhaust air flow is conveyed from the ventilator arrangement (5, 19),
**characterized in that**
the subframe (2) has a chamber (3) which is multilaterally enclosed by the subframe's walls (8, 11, 12) connected substantially airtight to each other and can be closed and accessed for emptying via a door provided with seals, the exhaust air inlet (4; 16, 17; 16, 217) opens out into the chamber (3), the clean air outlet (19) leads out of the chamber (3), and the solid body receiving volume (3; 6) is situated in the chamber (3), and that
at the exhaust air inlet (16, 17; 16, 217) on a side wall of the chamber (3), at least one hose connection port (16) is provided for a suction hose (15) which discharges the exhaust air from the on-table woodworking machine (1).

2. The on-table woodworking machine subframe (2; 102; 202) according to claim 1, wherein the clean air outlet (19) and preferably also the exhaust air inlet (16, 217) open out into the chamber (3) above a chamber bottom (12) and spaced apart therefrom with respect to the height.

3. The on-table woodworking machine subframe (102) according to any one of the preceding claims, wherein the solid body receiving volume (6) is situated in a filter container (6) which has an outer shell which consists at least in sections of a filter material and is connected with an inlet opening to the exhaust air inlet (16, 17), wherein the filter container (6) is accommodated in the chamber (3).

4. The on-table woodworking machine subframe (102) according to claim 3, wherein the filter material is a preferably dimensionally rigid textile material, for example a polyester needle felt, and the filter container (6) is a chip bag (6) consisting at least substantially of the textile material.

5. The on-table woodworking machine subframe (2; 102) according to any one of the preceding claims, wherein the separation arrangement (3, 7; 6, 107) has a filter unit (7; 107) which is arranged upstream of the clean air outlet (19) and through which the exhaust air flow is directed out of the chamber (3), in particular a filter cartridge (107) which is arranged upstream of the ventilator unit (5, 19) in terms of flow.

6. The on-table woodworking machine subframe (102) according to claim 5, wherein the separation arrangement (6, 107) in the chamber (3) comprises the filter container (6) and a filter cartridge (107) which is arranged downstream of the filter container (6) in terms of flow, wherein the filter material of the outer shell of the filter container (6) is permeable to air but retains chips and the filter cartridge is permeable to air but retains dust so that the filter container (6) encloses a first solid body receiving volume (6) for coarse solid bodies such as chips and the filter cartridge (107) forms a second solid body receiving volume (107) for finer solid bodies such as dust.

7. The on-table woodworking machine subframe (2; 102; 202) according to any one of the preceding claims, wherein the table plate (8) forms at the same time a wall of the chamber (3).

8. The on-table woodworking machine subframe (102) according to claim 4, wherein the hose connection port (16) for a suction hose (15) discharging the exhaust air from the machine (1) projects outwardly from the side wall of the chamber (3) and protrudes into the chamber interior for a connection hose (17) which opens out into the chip bag (6).

9. The on-table woodworking machine subframe (2; 102; 202) according to any one of the preceding claims, wherein the valve arrangement (5, 19) has an external drive unit (19) arranged on a side wall (11) of the chamber for a ventilator (5) arranged upstream of a clean air outlet opening in the side wall (11) of the chamber.

10. The on-table woodworking machine subframe (2; 102; 202) according to claim 9, wherein the drive unit (19) has at least one slot for plugging in a power supply of the machine tool (1) and preferably an emergency switch, and a control unit which upon switching off the extraction unit and the power supply plugged into the drive unit, first switches off the machine tool and only after a time delay, the extraction unit.

11. The on-table woodworking machine subframe (102) according to claim 9 or claim 10, wherein the filter cartridge (107) has a cylindrical filter section extending around the ventilator (5) through which filter section, the exhaust air flow is guided.

12. The on-table woodworking machine subframe (202) according to any one of the preceding claims, wherein said subframe stands on rollers (210).

## Revendications

1. Structure de support pour une machine de traitement du bois sur table (2 ; 102 ; 202) pour l'installation d'une machine de traitement du bois sur table (1) par usinage, sans socle, à la hauteur de travail d'un utilisateur, avec un plateau de table (8) dimensionné de façon appropriée pour des machines de traitement du bois sur table courantes, adaptées pour être posées sur une surface, telles que par exemple des scies circulaires ou des machines de dressage et d'usinage d'épaisseur, pour la disposition sur une machine de traitement du bois sur table, dans laquelle
la structure de support (2) est conçue comme un dispositif d'aspiration pour la machine-outil (1), avec au moins une entrée d'air sortant (4 ; 16, 17 ; 16, 217) pour de l'air sortant de la machine-outil (1), et un système de ventilateur (5, 19) pour le déplacement du flux d'air sortant, un système de séparation (3, 7 ; 6, 107 ; 3, 4, 19) pour l'évacuation de corps solides à partir du flux d'air sortant, un volume d'accueil de corps solides (3 ; 6, 7) pour la réception des corps solides extraits de l'air sortant, et une sortie d'air pur (19), vers laquelle est transporté le flux d'air purifié venant du système de ventilateur (5, 19),
**caractérisée en ce que**
la structure de support (2) comporte une chambre (3) entourée de plusieurs côtés de parois (8, 11, 12) reliées entre elles de façon quasiment hermétique, qui peut être fermée par une porte pourvue de joints d'étanchéité et qui est accessible pour l'évacuation, l'entrée d'air sortant (4 ; 16, 17 ; 16, 217) débouche dans la chambre (3), la sortie d'air pur (19) mène hors de la chambre (3), et le volume d'accueil de corps solides (3 ; 6) se trouve dans la chambre (3), et **en ce que**
à l'entrée d'air sortant (4 ; 16, 17 ; 16, 217), sur une paroi latérale de la chambre (3), il est prévu au moins un raccord de tuyau (16) pour un tuyau d'aspiration (15) permettant d'évacuer l'air sortant de la machine de traitement du bois sur table (1).

2. Structure de support pour une machine de traitement du bois sur table (2 ; 102 ; 202) selon la revendication 1, dans laquelle la sortie d'air pur (19) et de préférence également l'entrée d'air sortant (16, 217) débouchent au-dessus d'un plancher de chambre (12) dans la chambre (3), tout en étant espacées de celui-ci dans la hauteur.

3. Structure de support pour une machine de traitement du bois sur table (102) selon l'une des revendications précédentes, dans laquelle le volume d'accueil de corps solides (6) se trouve dans un récipient de filtration (6) comportant une enveloppe extérieure constituée au moins partiellement d'un matériau filtrant et reliée à l'entrée d'air sortant (16, 17) par une ouverture d'entrée, dans laquelle le récipient de filtration (6) est installé dans la chambre (3).

4. Structure de support pour une machine de traitement du bois sur table (102) selon la revendication 3, dans laquelle le matériau de filtration est de préférence une matière textile rigide, par exemple un feutre de polyester aiguilleté, et le récipient de filtration (6) est de préférence une poche à copeaux (6) constituée au moins en majeure partie de la matière textile.

5. Structure de support pour une machine de traitement du bois sur table (2 ; 102) selon l'une des revendications précédentes, dans laquelle le système de séparation (3, 7 ; 6, 107) comporte une unité de filtration (7 ; 107) disposée en amont de la sortie d'air pur (19), par laquelle le flux d'air sortant est guidé hors de la chambre (3), en particulier une cartouche de filtration (107) disposée en amont de l'unité de ventilateur (5, 19) dans le sens du flux.

6. Structure de support pour une machine de traitement du bois sur table (102) selon la revendication 5, dans laquelle le système de séparation (6, 107) dans la chambre (3) comporte le récipient de filtration (6) ainsi qu'une cartouche de filtration (107) disposée en aval du récipient de filtration (6) dans le sens du flux, dans laquelle la matière filtrante de l'enveloppe extérieure du récipient de filtration (6) laisse passer l'air, mais tout en retenant les copeaux, et la cartouche de filtration laisse passer l'air, mais tout en retenant la poussière, de sorte que le récipient de filtration (6) enserre un premier volume d'accueil de corps solides (6), destiné à des corps solides grossiers tels que des copeaux, et la cartouche de filtration (107) forme un deuxième volume d'accueil de corps solides (107) destiné à des corps solides plus fins, tels que la poussière.

7. Structure de support pour une machine de traitement du bois sur table (2 ; 102; 202) selon l'une des revendications précédentes, dans laquelle le plateau de table (8) forme simultanément une paroi de la chambre (3).

8. Structure de support pour une machine de traitement du bois sur table (102) selon la revendication 4, dans laquelle le raccord de tuyau (16) destiné à un tuyau d'aspiration (15) permettant d'évacuer l'air sortant de la machine (1) fait saillie vers l'extérieur à partir de la paroi latérale de la chambre (3), et s'introduit à l'intérieur de la chambre pour un tuyau de raccordement (17) débouchant dans la poche à copeaux (6).

9. Structure de support pour une machine de traitement du bois sur table (2 ; 102 ; 202) selon l'une des revendications précédentes, dans laquelle le système de ventilateurs (5, 19) comporte un agrégat d'entraînement (19) disposé sur une paroi latérale (11) de la chambre, pour un ventilateur (5) disposé avant l'ouverture de sortie d'air pur dans la paroi latérale (11) de la chambre.

10. Structure de support pour une machine de traitement du bois sur table (2 ; 102 ; 202) selon la revendication 9, dans laquelle l'agrégat d'entraînement (19) comporte au moins un point d'enfichage pour le branchement d'une alimentation électrique de la machine-outil (1), et de préférence un interrupteur MARCHE-ARRÊT, ainsi qu'une unité de commande permettant d'éteindre tout d'abord la machine-outil, par l'interrupteur MARCHE-ARRÊT, lors de l'extinction du dispositif d'aspiration et de l'alimentation électrique branchée sur l'agrégat d'entraînement, et d'éteindre ensuite le dispositif d'aspiration.

11. Structure de support pour une machine de traitement du bois sur table (102) selon l'une des revendications 9 ou 10, dans laquelle la cartouche de filtration (107) comporte une section de filtration cylindrique encerclant le ventilateur (5), à travers laquelle passe le flux d'air sortant.

12. Structure de support pour une machine de traitement du bois sur table (202) selon l'une des revendications précédentes, dans laquelle elle est disposée sur des roulettes (210).
